# EUROPÄISCHE PATENTSCHRIFT

(11) **EP 0 751 267 B1**
(45) Veröffentlichungstag und Bekanntmachung des Hinweises auf die Patenterteilung: **14.03.2001**
(21) Anmeldenummer: 96110268.8
(22) Anmeldetag: 26.06.1996
(51) Int. Cl.: E04C 2/16

(54) **Leichtbauteile mit Faserarmierung**
Light-weight components with reinforcing fibers
Eléments de construction légers à armature en fibres

(30) Priorität: 27.06.1995 DE 29510380 U
(43) Veröffentlichungstag der Anmeldung: 02.01.1997
(73) Patentinhaber: Kakuk, Stefan, D-68794 Oberhausen-Rheinhausen (DE)
(72) Erfinder: Kakuk, Stefan, D-68794 Oberhausen-Rheinhausen (DE)

(56) Entgegenhaltungen:
- EP-A- 0 436 842
- EP-B- 0 269 990
- DE-A- 2 930 939
- DE-A- 3 012 998
- DE-C- 950 409
- DE-U- 8 904 890

## Beschreibung

Die Erfindung betrifft Leichtbauteile aus zur Armierung geeigneten Naturfasern gemäß dem Oberbegriff des Hauptanspruchs.

Zur Baustoffarmierung werden die verschiedensten Fasern benutzt. Faserstoffe, wie beispielsweise Asbest, haben sich als gesundheitsschädlich erwiesen. Andere Faserstoffe wiederum verlieren nach gewisser Zeit durch chemische Reaktionen und durch Zersetzung die Festigkeit und damit ihre armierende Wirkung.
Faserstoffe, die sich teilweise bewehrt haben, sind sehr teuer, schwer zu verarbeiten und können nur in begrenzten Mengen der Rohmasse als Armierung beigemischt werden.

Auch das Stroh ist seit Jahrhunderten für die Erstellung von Bauwerken als Dacheindeckung oder gehäckselt als Armierung bei der Herstellung von Lehmziegeln oder Lehmmörtel bekannt.

Die europäische Patentschrift 0 269 990 B1 beschreibt längsgespaltene Strohhalmteilstücke als Armierung für Bauteile, die mit einem wasserabstoßendem und einem feuerhemmendem Mittel imprägniert und mit einem Bindemittel verbunden sind.

Die europäische Patentschrift 0 436 842 B1 beschreibt gehäckseltes Stroh als Armierung und Zement, Gips und Kalk als Bindemittel. Da das Stroh eine glatte und mit einer Schutzschicht überzogene Oberfläche hat, ist die Haftung im Bindemittel sehr gering.
Andererseits enthält das Stroh leicht wasserlösliche Farbstoffe, die sich beim Wassereindringen in die mit Stroh hergestellten Baustoffe auflösen und Farbflecke bilden.

Ferner hat sich gezeigt, daß das gehäckselte Stroh und die längsgespaltenen Strohteilstücke bei einem Brand verkohlen, obwohl eine feuerhemmende Imprägnierung aufgebracht ist.
Ferner ist es ein Erfahrungswert, daß große und relativ grobe Strohteile und längsgespaltete Stohteilstücke bzw. Stohplättchen nicht die optimale Armierungswirkung haben. In der Praxis hat sich herausgestellt, daß das Stroh in der Langzeit vom hydraulischen Bindemittel, insbesondere Zement (Alkalien) angegriffen wird und somit die armierende Wirkung verlorgen geht.

Der vorliegenden Erfindung liegt die Erkenntnis zugrunde, daß in Lehm oder Ton eingebettetes Stroh dagegen Jahrhunderte überdauert. Ton und Lehm ist jedoch wiederum in seiner natürlichen Form sehr wasserlöslich und besitzt nicht die erforderliche Festigkeit, die an zeitgemäße Baustoffe gestellt wird.
Besonders fraglich ist die Oberflächenbeschichtung und Oberflächenbehandlung von den vom Lehm oder Ton erstellten Bauteile.
Ein weiterer Aspekt bei der Herstellung von Bauteilen ist die Beachtung von Gefahren, die Allergiekrankheiten hervorrufen können. Es muß daher darauf geachtet werden, daß neue Baustoffe absolut schadstoffrei und bauphysikalisch optimale Eigenschaften aufweisen. Das setzt voraus, daß die zur Herstellung von Baustoffen verwendeten Rohstoffe und Komponenten absolut schadstoffrei, optimal aufbereitet und miteinander abgestimmt sind, damit daraus ein zeitgemäßer schadstoffreier, bauphysikalisch einwandfreier und kostengünstiger Baustoff entsteht.

Alle heute bekannten Baustoffe erfüllen diese Anforderungen nicht oder nur teilweise.

Der vorliegenden Erfindung liegt daher die Aufgabe zugrunde, einen biologisch unbedenklichen und sehr preiswerten Rohstoff, nämlich Stroh- und/oder Grasfasern so aufzubereiten, daß sie die optimale Armierungswirkung haben, wobei letztendlich die Gefahren von Allergiekrankheiten zu berücksichtigen sind.

Diese Aufgabe wird erfindungsgemäß durch Leichtbauelemente gemäß den Merkmalen des Kennzeichens des vorgeschlagenen Hauptanspruchs gelöst. Besondere Weiterbildungen der Erfindung sind in den Unteransprüchen gekennzeichnet.

Erfindungsgemäß werden nun die verwendeten Fasern, insbesondere Strohfasern oder getrocknete Gräserhalme mit einem modifizierten Bindemittel sowie Katalysatoren umhüllt und konserviert. Somit wird die Zerstörung der Fasern ausgeschlossen. Aus dem Stroh und/oder den getrockneten Gräserhalmen werden feinste Fasern hergestellt, die bei der Herstellung von Bauteilen, insbesondere beim Extruderverfahren, als Armierung dienen. Gemäß der vorliegenden Erfindung werden nur schadstoffunbelalastete Bindemittel, wie Lehm und/oder Ton und/oder Gips und/oder Zement und/oder Kalk und nach Bedarf schadstoffunbelastete mineralische und/oder organische Zuschlagsstoffe verwendet. Sämtliche Rohstoffkomponenten sind mit mindestens einem schadstoffunbelasteten Katalysator modifiziert, damit eine optimale Verbindung zwischen den Fasern, Bindemitteln und anderen Komponenten gewährleistet ist. Eine zusätzliche Imprägnierung der Armierungsfasern wird somit überflüssig.
Erfindungsgemäß werden die Stroh- und/oder Grasfasern von den mit Katalysatoren modifizierten Bindemittel durchtränkt, umhüllt, konserviert und verbunden. Somit Dem schadstoffunbelasteten Lehm und/oder Ton und/oder Kalk wird unter genauer Beachtung seiner Eigenschaften durch peinlichst genauer Beimischung von SiO2, Al2O3, Fe2O3, CaO, MgO in Verbindung mit den Katalysatoren seine vorteilhaften Eigenschaften erhalten. Er erhält somit eine enorme Festigkeit und Wasserunempfindlichkeit bzw. wird wasserfest.

Hieraus resultiert, daß eine wasserfeste und eine zeitgemäße Oberflächenbehandlung sowie Beschichtung mit allen handelsüblichen Materialien gewährleistet ist.

Bei einer besonders bevorzugten Ausführungsform der Erfindung ist vorgesehen, daß die Katalystoren von organischer Art sind. Diese werden mit dem Bindemittel und den verwendeten Strohsorten abgestimmt. Die Modifizierung erfolgt, indem die Katalysatoren dem trockenen Bindemittel beigemischt und mit dem Bindemittel intensiv durchgemischt werden. Erst danach wird Wasser nach Bedarf dosiert und mit der Masse gemischt. Bei den Zuschlagsstoffen handelt es sich insbesondere um poröse Stoffe, wie gemahlener Bims, Kreide oder auch verschiedene Steinmehlsorten. Die Fasern werden dadurch gewonnen, daß in Rund- oder Viereckballen, beispielsweise gepreßtes Stroh, in einem Ballenauflöser auf eine Länge von ca. 1 bis 2 cm vorzerkleinert wird und in einem geschlossenem System, in einer Strohmühle, die vorzugsweise mit einem Sieb ausgerüstet ist, auf die gewünschte Länge von ca. 1 bis 3 mm zerfasert wird. Hierbei ist zu beachten, daß durch die Zerkleinerung der entstehende Staub weitgehend abgesaugt bzw. von den Fasern getrennt wird.

Durch das erfindungsgemäße Leichtbauteil wird eine große Wärmespeicherung und eine ausgezeichnete Atmungsfähigkeit erreicht, was durch die Eigenschaften von Lehm und Ton und ihrem Feuchtigkeitsausgleich bzw. Feuchtigkeitsregulierungsvermögen in Wohnräumen zu begründen ist.

## Patentansprüche

1. Leichtbauteile für Wände, Decken, Stützen und für aus Leichtbauteilen erstellbare Elemente, bestehend aus zur Armierung der Bauteile geeignete Naturfasern, wie Stroh oder Gräserhalmen, die durch Bindemittel verbunden sind,
dadurch gekennzeichnet,
daß die Fasern mit modifiziertem Bindemittel und Katalysatoren umhüllt und konserviert sind.

2. Leichtbauteile nach Anspruch 1,
dadurch gekennzeichnet,
daß die verwendeten Komponenten schadstoffunbelastet sind.

3. Leichtbauteile nach Anspruch 1 und 2,
dadurch gekennzeichnet,
daß es sich bei den verwendeten Fasern um feinste, aus Stroh und/oder getrockneten Gräserhalmen gewonnen Fasern handelt.

4. Leichtbauteile nach Anspruch 1 bis 3,
dadurch gekennzeichnet,
daß das Bindemittel aus schadstoffunbelastetem Lehm besteht.

5. Leichtbauteile nach Anspruch 1 bis 3,
daß das Bindemittel aus schadstoffunbelastetem Ton besteht.

6. Leichtbauteile nach Anspruch 1 bis 3,
daß das Bindemittel aus schadstoffunbelastetem Gips besteht.

7. Leichtbauteile nach Anspruch 1 bis 3,
daß das Bindemittel aus schadstoffunbelastetem Zement besteht.

8. Leichtbauteile nach Anspruch 1 bis 3,
daß das Bindemittel aus schadstoffunbelastetem Kalk besteht.

9. Leichtbauteile nach mindestens einem der
vorhergehenden Ansprüche,
dadurch gekennzeichnet,
daß das Bindemittel aus einer Mischung aus schadstoffunbelastetem Lehm und/oder Ton und/oder Gips und/oder Zement und/oder Kalk besteht.

10. Leichtbauteile nach Anspruch 9,
dadurch gekennzeichnet,
daß die Mischung bzw. das Bauteil schadstoffunbelastete mineralische und/oder organische Zuschlagstoffe beinhaltet.

11. Leichtbauteile nach Anspruch 1 bis 10,
dadurch gekennzeichnet,
daß sämtliche Rohstoffkomponenten mit mindestens einem schadstoffunbelasteten Katalysator modifiziert sind.

12. Leichtbauteile nach Anspruch 1 bis 11,
dadurch gekennzeichnet,
daß die Fasern Stroh- und/oder Grasfasern sind, die von den mit Katalysatoren modifizierten Bindemittel durchtränkt, umhüllt, konserviert und verbunden sind.

13. Leichtbauteile nach Anspruch 3,4,8 bis 12,
dadurch gekennzeichnet,
daß der vewendete Lehm und/oder Ton und/oder Kalk mittels SiO2, Al2O3, Fe2O3, CaO, MgO in Verbindung mit Katalysatoren vermischt ist.

14. Leichtbauteile nach Anspruch 1 bis 13,
dadurch gekennzeichnet,
daß die Katalysatoren organischer Art sind.

15. Leichtbauteile nach Anspruch 14,
dadurch gekennzeichnet,
daß die Katalysatoren mit den Bindemitteln und Strohsorten eine abgestimmte Mischung bilden.

16. Leichtbauteile nach Anspruch 10 bis 15,
dadurch gekennzeichnet,
daß die Zuschlagsstoffe, insbesondere poröse Stoffe sind.

17. Leichtbauteile nach Anspruch 16,
dadurch gekennzeichnet,
daß die Zuschlagsstoffe aus gemahlenem Bims bestehen.

18. Leichtbauteile nach Anspruch 16,
dadurch gekennzeichnet,
daß die Zuschlagsstoffe aus Kreide bestehen.

19. Leichtbauteile nach Anspruch 16,
dadurch gekennzeichnet,
daß die Zuschlagsstoffe aus Steinmehl bestehen.

20. Leichtbauteile nach Anspruch 1 bis 19,
dadurch gekennzeichnet,
daß die verwendeten Naturfasern aus in Ballenauflösern auf eine Länge von 1 bis 2 cm vorzerkleinerten und in einer Strohmühle auf 1 bis 3 mm Länge zerfaserten Teilchen bestehen.

## Claims

1. Light-weight structural components for walls, ceilings, structural supports and for constructional elements consisting of suitable natural fibres for reinforcement, such as straw or grass stalks bonded with the aid of a binding agent, and characterised in that the fibres are enclosed and preserved using a modified binding agent and catalysts.

2. Light-weight structural components according to Claim 1, characterised in that the components used are unpolluted.

3. Light-weight structural components according to Claims 1 and 2, characterised in that the fibres used are finest grade grass stalks obtained from straw and/or dry grass stalks.

4. Light-weight structural components according to Claims 1 to 3, characterised in that the binding agent consists of unpolluted loam.

5. Light-weight structural components according to Claims 1 to 3, characterised in that the binding agent consists of unpolluted clay.

6. Light-weight structural components according to Claims 1 to 3, characterised in that the binding agent consists of unpolluted gypsum.

7. Light-weight structural components according to Claims 1 to 3, characterised in that the binding agent consists of unpolluted cement.

8. Light-weight structural components according to Claims 1 to 3, characterised in that the binding agent consists of unpolluted lime.

9. Light-weight structural components according to at least one of the above claims, characterised in that the binding agent consists of a mixed compound of unpolluted loam and/or clay and/or gypsum and/or cement and/or lime.

10. Light-weight structural components according to Claim 9, characterised in that the mixed compound or the structural component contains unpolluted mineral and/or organic additives.

11. Light-weight structural components according to Claims 1 to 10, characterised in that all raw material components have been modified with at least one unpolluted catalyst.

12. Light-weight structural components according to Claims 1 to 11 characterised in that the fibres are straw and/or grass fibres, which are saturated, enclosed, preserved and bonded using a binding agent modified with catalysts.

13. Light-weight structural components according to Claims 3, 4, 8 to 12, characterised in that the loam and/or clay and/or lime used is mixed with SiO2, Al2O3, FeSO3, CaO, MgO, in combination with catalysts.

14. Light-weight structural components according to Claims 1 to 13, characterised in that catalysts are organic in nature.

15. Light-weight structural components according to Claims 14, characterised in that catalysts produce a balanced mix with the binding agents and straw types.

16. Light-weight structural components according to Claims 10 to 15, characterised in that the additives in particular are porous materials.

17. Light-weight structural components according to Claim 16, characterised in that the additives consist of pumice.

18. Light-weight structural components according to Claim 16, characterised in that the additives consist of chalk.

19. Light-weight structural components according to Claim 16, characterised in that the additives consist of rock dust.

20. Light-weight structural components according to Claims 1 to 19 characterised in that the natural fibres used consist of particles pre-milled in a bale chopper to a length of 1 to 2 cm and reduced in a straw mill to a length of 1 to 3 mm.

## Revendications

1. Eléments de construction légère pour cloisons, plafonds, structures de support et pour éléments réalisables à partir d'éléments de construction légère se composant de fibres naturelles servant à l'armature des éléments de construction, telles que paille et brins d'herbe reliés au moyen de liants, caractérisé en ce que les fibres sont enrobées et conservées avec liant modifié et catalyseurs.

2. Lot de construction selon la revendication 1, caractérisé en ce que les composants ne sont pas soumis à nuisances par substances polluantes.

3. Lot de construction selon la revendication 1 et 2, caractérisé en ce que les fibres utilisées sont des fibres très fines, obtenues à partir de paille et/ou de brins d'herbe séchés.

4. Lot de construction selon la revendication 1 à 3, caractérisé en ce que le liant se compose de colle non soumise à nuisances par substances polluantes.

5. Lot de construction selon la revendication 1 à 3, caractérisé en ce que le liant se compose d'argile non soumis à nuisances par substances polluantes.

6. Lot de construction selon la revendication 1 à 3, caractérisé en ce que le liant se compose de plâtre non soumis à nuisances par substances polluantes.

7. Lot de construction selon la revendication 1 à 3, caractérisé en ce que le liant se compose de ciment non soumis à nuisances par substances polluantes.

8. Lot de construction selon la revendication 1 à 3, caractérisé en ce que le liant se compose de chaux non soumise à nuisances par substances polluantes.

9. Eléments de construction légère selon l'une quelconque des revendications précédentes, caractérisé en ce que le liant se compose d'un mélange de colle et/ou argile et/ou plâtre et/ou ciment et/ou chaux non soumis à nuisances par substances polluantes.

10. Eléments de constructions légère selon la revendication 9, caractérisé en ce que le mélange resp. l'élément de construction contient des additifs minéraux et/ou organiques non soumis à nuisances par substances polluantes.

11. Eléments de construction légère selon la revendication 1 à 10, caractérisé en ce que tous les composants bruts sont modifiés avec au moins un catalyseur non soumis aux nuisances par substances polluantes.

12. Eléments de construction légère selon la revendication 1 à 11, caractérisé en ce que les fibres sont de la paille et/ou des brins d'herbe imprégnés, enrobés, conservés et reliés par des liants modifiés avec catalyseurs.

13. Eléments de construction légère selon la revendication 3, 4, 8 à 12, caractérisé en ce que la colle et/ou l'argile et/ou la chaux utilisés sont mélangées avec du SiO2, Al2O3, FeSO3, CaO, MgO, en liaison avec des catalyseurs.

14. Eléments de construction légère selon la revendication 1 à 13, caractérisé en ce que les catalyseurs sont de type organique.

15. Eléments de construction légère selon la revendication 14, caractérisé en ce que les catalyseurs forment avec les liants et qualités de paille un mélange adapté.

16. Eléments de construction légère selon la revendication 10 à 15, caractérisé en ce que les additifs en particulier sont des substances poreuses.

17. Eléments de constructions légère selon la revendication 16, caractérisé en ce que les additifs se composent de farine de ponce.

18. Eléments de construction légère selon la revendication 16, caractérisé en ce que les additifs se composent de craie.

19. Eléments de construction légère selon la revendication 16, caractérisé en ce que les additifs se composent de poudre de roche.

20. Eléments de construction légère selon la revendication 1 à 19, caractérisé en ce que les fibres naturelles utilisées se composent de particules prébroyées en déballeurs à une longueur de 1 à 2 cm et défibrées dans un broyeur de paille à une longueur de 1 à 3 mm.
